Europäisches Patentamt

European Patent Office

Office européen des brevets

(11) Publication number: **0 131 812 B1**

# EUROPEAN PATENT SPECIFICATION

(45) Date of publication of patent specification: **23.10.91**  (51) Int. Cl.⁵: **G06K 13/08, G06K 13/07**

(21) Application number: **84107478.4**

(22) Date of filing: **28.06.84**

(54) **Value-rated card readout and obliterating device, particularly for use with public telephone set enabling magnetic cards.**

(30) Priority: **15.07.83 IT 6777083**

(43) Date of publication of application:
**23.01.85 Bulletin 85/04**

(45) Publication of the grant of the patent:
**23.10.91 Bulletin 91/43**

(84) Designated Contracting States:
**BE CH DE FR GB LI**

(56) References cited:
**FR-A- 2 357 011
FR-A- 2 382 720
US-A- 3 641 931
US-A- 4 071 741
US-A- 4 262 312**

**IBM TECHNICAL DISCLOSURE BULLETIN, vol. 18, no. 11, April 1976, pages 3793-3794, New York, US; W.D. FRENCH et al.: "Bank depository"**

(73) Proprietor: **URMET S.p.A. Costruzioni Elettro-Telefoniche
Via Bologna 188/C
I-10154 Torino(IT)**

(72) Inventor: **Mondardini, Massimo
Via Mazzini 40
I-10123 Torino(IT)**

(74) Representative: **Modiano, Guido et al
MODIANO, JOSIF, PISANTY & STAUB
Modiano & Associati Via Meravigli, 16
I-20123 Milano(IT)**

## Description

This invention relates to a value-rated card readout and obliterating device, particularly for use with public telephone set enabling magnetic cards, as defined in the preamble of claim 1. A device of the type defined in the preamble of claim 1 is known from FR-A-2 382 720.

Furthermore US-A-4 262 312 describes a device for magnetic recording and printing of card mediums, thus not specifically designed for value-rated card readout and obliteration, including a freely rotatable drum for supporting and transferring a card from an inlet mouth to an outlet mouth, said inlet and outlet mouths being separated from each other, at least one endless drive belt in contact engagement with the drum surface, means for feeding a card in the nip between said belt and drum surface, thereby said card is transferred by said drive belt co-acting with the drum rotation, and belt deflecting means comprising a roller, the readout and erase magnetic head (together with a printing station) being arranged radially to said drum.

Known is to use value-rated cards to enable generic telephone set employed for public service, in particular to enable public telephone sets wherewith the use of value-rated cards, in lieu of coins and/or tokens, is made necessary by the current ability to automatically dial for toll communication also from public stations. Among the various types of cards presently in use, the description which follows will deal with magnetic cards comprising a magnetic strip having the credit references recorded thereon on which the card face value depends. These credit references comprise a preset number of bits, e.g. of logic level "1", which are normally called automatic increments and subjected to down counting and cancellation in order to fully or partly obliterate the card.

The device of this invention essentially includes mechanical members for card entrainment and magnetic readout and cancel heads for reading and cancelling the magnetic traces, and -- where applied to telephone sets as contemplated by this invention -- an electronics for processing the readout data and an interface of connection to the set to be enabled.

It should be noted, however, that the reference to a public telephone set is not to be taken in a limitative sense, the inventive device being advantageously useful to enable generic public service apparatus for a variety of services. Of course, the electronics and any interface for connection to the set will have different constructions depending on the intended application for the device, such constructions and interface being well within the design capabilities of the skilled one.

Accordingly the task of this invention is to provide a simplified construction card readout and obliterating device, in particular one including mechanical card entrainment means, which can afford maximum reliability in operation for a minimal power requirement. The accomplishment of this task is obviously particularly important to the operation of public telephone sets both on account of the far-apart and capillary location of the sets, and to also ensure the availability of the service in the event of power outages by utilizing local power storage means which may be mere capacitors.

Within that task it is an object of this invention to provide a device which affords easy introduction of several cards sequentially as the cards introduced are exhausted. This allows, inter alia, by appropriately adjusting the card readout time, prevention of left-over credit transfer from a previously obliterated card to the next one, with attendant simplification of the readout data processing electronics.

It is a further object of the invention to provide a device of compact design but wherein the readout means and obliteration means are separated by a distance at least equal to the card size, thereby the card may be allowed to stay between said means during the time lapse between the data readout and supply of the part or full obliteration instructions.

The above task and objects, as well as yet other objects which will be apparent from the following detailed description are achieved by a value-rated card readout and obliteration device, particularly for use with public telephone set enabling magnetic cards, as defined in claim 1-

The drive belt cooperates preferably with a second, driven belt receiving its motion from the drum; the two side-by-side belts act on the drum edges and correspondingly engage with the card edges to hold it correctly aligned during the transfer step.

Further features, objectives and advantages of the invention will be more readily understood from the detailed description which follows, with reference to the accompanying illustrative and not limitative drawings, where:

Figure 1 is a perspective view of a public telephone set, of the conventional dialling keyboard type, incorporating a device according to the invention;

Figure 2 is a perspective view of a card;

Figure 3 is a schematic sectional view taken along the line III-III of Figure 1 and showing in detail form the card entrainment means and readout and erase heads positioning;

Figure 4 is a schematic view taken in the direction of the arrow IV-IV of Figure 3;

Figures 5 and 6 are sectional view similar to Figure 3, showing different positions of the card with respect to the entrainment members; and

Figure 7 is a diagram of the electronics associated with the readout and erase heads in the exemplified instance of this device being incorporated to a public telephone set.

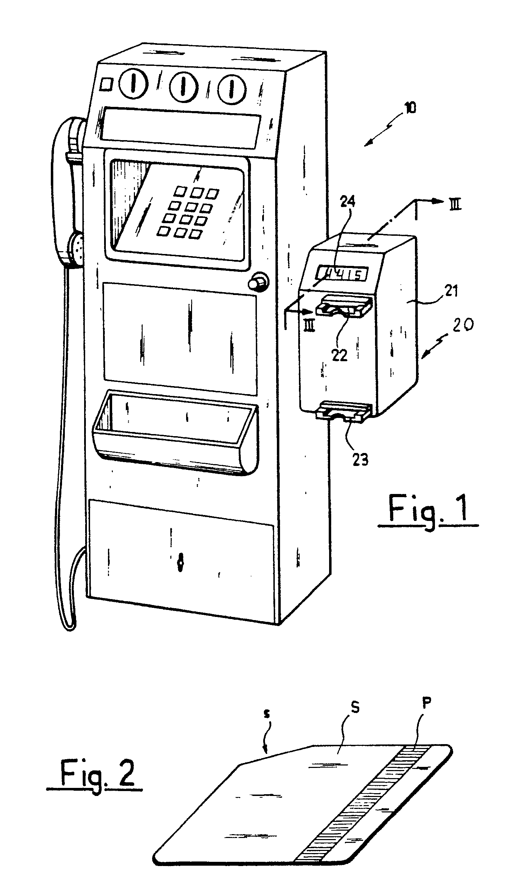

With initial reference to Figures 1 to 5, at 10 there is indicated a public telephone set of the conventional token and coin actuated type, and at 20 the card readout and obliterating device according to the invention. This device comprises an enclosing case 21 having two front mouths 22-23, respectively for introducing and returning the cards, as well as a display 24 showing the credit figure. The introduction mouth 22 is provided with a mechanical feeler (not shown) adapted to detect a bevel s in the card S (Figure 2) in order to prevent wrong introduction of the card which must have its magnetic track P facing up. Housed for free rotation within the enclosing case 21 is a card supporting and entraining drum 25. That drum, which is advantageously formed from a polymeric material, has a lightened construction, e.g. of the spoke type, and a width only slightly greater than that of the card S, and a diameter equal to about twice the maximum dimension of the card.

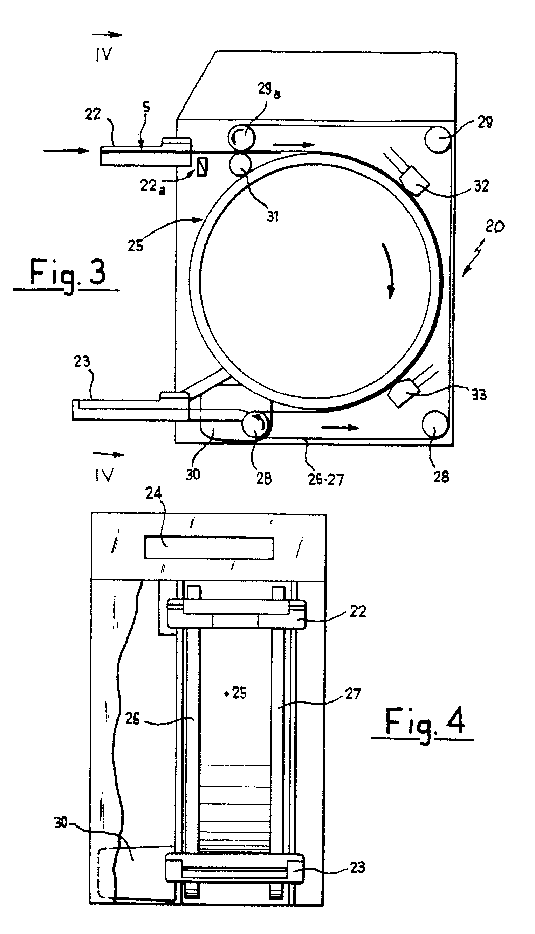

On the drum there act, by contact engagement, first and second parallel belts 26-27 which engage with the drum surface over an arc length equal to one half its circumference; the belts being endless ones and each trained around pairs of lower and upper rollers 28-29, respectively. One of said belts, e.g. the belt 26, is a driving belt and will be referred to as drive belt hereinafter. More specifically, one roller in the lower pair 28 is a drive roller and derives its motion from a DC gear motor 30. As clearly shown in Figure 3, the mouths 22-23 are located on the extensions of respective diametrically opposed tangent lines to the drum, and the outer rollers 29a in the upper pair, also tangent to said extensions, cooperate with a pinch roller 31 to form an initial card drive unit. The second, non-driving, belt is in turn driven by contact engagement with the drum, and this in order to prevent rotation of the card owing to any speed differentials of the belts.

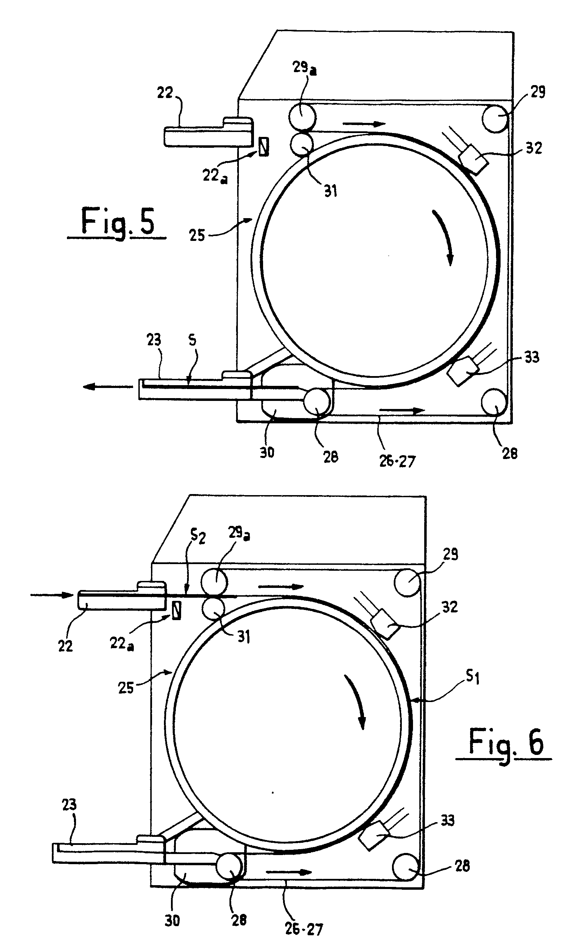

Provided at the introduction mouth 22, is a magnetic reed switch 22a for consent to starting the gear motor 30. The card, as introduced through the mouth 22, causes, therefore, the gear motor to be started together with the drum 25, and on being urged to contact the initial drive unit, is caught by the latter and fed into the nip between the drum outer surface and belts 26-27. Thus, the card will move together with the drum and be successively brought into alignment with first and second magnetic heads, respectively a readout one 32 and erase one 33. The heads are oriented radially to the drum 25 and spaced apart at an angular pitch of any selected length. It is advantageous that that length be selected to be at least equal to the card size and preferably slightly larger than said size. Thus, the card can be allowed to stay between the two heads, e.g. for the time lapse required for processing (including credit down counting) the data read by the head 32, which is followed by the obliteration command supplied to the head 33. Furthermore, as shown in Figure 6, the stay of a spent card $S_1$ in between the heads allows sequential introduction of a further card $S_2$ and, by selecting a suitably short time for readout, it becomes possible to prevent transfer of any left-over credit from a previously obliterated card to a next one. The stop and forward command past the stay position is supplied by a logics associated with the readout head; in the instance of a telephone application, forward movement is produced, for example, by the cash command from the exchange at the call end, or by a similar command from the exchange at the end of the credit element downcount.

Thus, the card is caused to move past the intermediate stay zone and brought into alignment with the erase head, which partly or fully obliterates the credit elements recorded on the card magnetic trace. After moving past the erase head 33, the card is ejected from the return mouth 23, also located on the extension of the tangent line to the drum 25. It will be noted that the device just described provides for entrainment of the cards in the so-called "tunnel" mode, which in addition to mechanical simplification, also permits sequential introduction of several cards in the manner outlined above.

The electronics for correlating the operation of the device described hereinabove would obviously depend on the mode of operation of the set wherewith the device is associated.

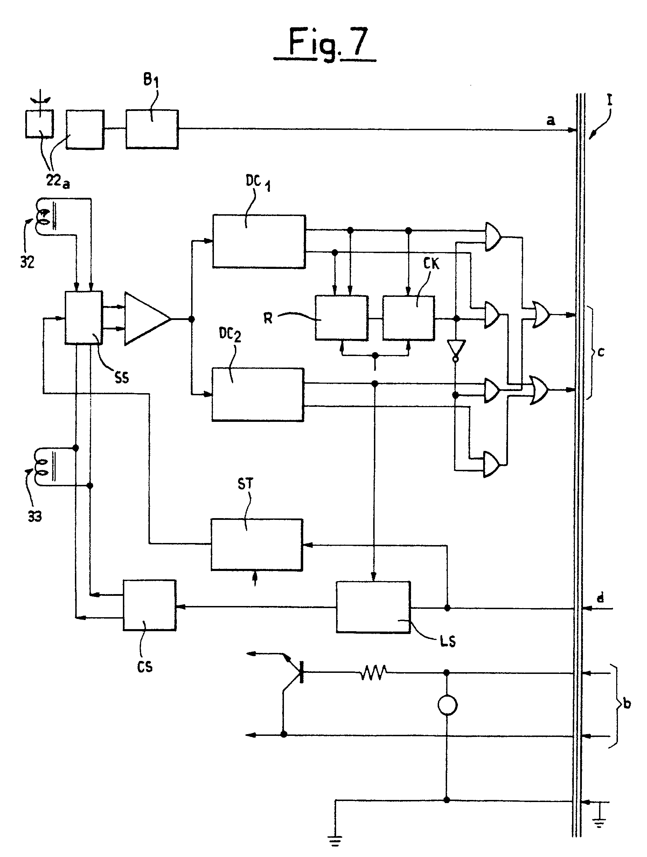

Shown in Figure 7 is a circuit diagram appropriate for the public telephone set shown in Figure 1. In that diagram, I designates the telephone set connection interface which controls the exchanged signals, which may be summarized as follows:

a) card presence;

b) gear motor forward command;

c) data read out on the card;

d) obliteration command and displayed data.

Indicated at SS is an automatic switching selector which, on resetting, enables the heads 32 or 33 successively and selectively.

Shown in the diagram is the magnetic switch 22a wherewith a flip-flop $B_1$ is associated which serves presence detector functions. The other blocks have the following functions: $DC_1$ key discriminator; $DC_2$ unit and protection discriminator; R, first "1" recognition; CK, key counter; ST, readout head selector; Ls, write (obliteration) logics; CS, write circuit.

In the exemplified instance of a public telephone set enabling application, the device operates as follows: on lifting the handset, if a card is present at the introduction mouth, the motor forward command is generated. The data read out by the readout head are transferred to the telephone set circuits, thereafter the motor forward movement is stopped and the card is positioned on the drum between the readout and obliteration stations.

The readout data (including, for example, the card serial number NS, a key number NC, and the yet available telephone credit) are transferred to the exchange circuits for appropriate checking.

If the card is enabled for traffic and has credit, the user receives the exchange tone and can begin to dial the desired telephone number; simultaneously on the device display there appears the amount of the usable credit.

The automatic increments or trips sensed during the call are received by the set, which updates the left-over credit displaying it. On approaching exhaustion of the credit, with known criteria, an acoustical warning tone is supplied and the left-over displayed credit is pulsed.

On hanging up the handset, or on full exhaustion of the credit, card return is commanded. Then, the motor forward control is reactivated which causes the card to move past the obliteration station. The card is updated with the left-over credit and returned to the user through the return mouth.

If on approaching exhaustion of the credit, during a call, the user inserts a fresh card through the inlet mouth, simultaneously with full obliteration and ejection of the previous card, the card thus presented is readout and the user allowed to carry on the conversation.

## Claims

1. A value-rated magnetic card readout and obliteration device comprising mechanical card entraining means (25-30) and separated magnetic track readout and erase means (32,33) particularly for use with public telephone set enabling magnetic cards (S) characterized in that said card entraining means comprises,
   - a freely rotatable drum (25) for transferring said card (S) from an inlet mouth (22) to an outlet mouth (23), said inlet and outlet mouth being separated from each other,
   - an endless belt drive (26) in contact engagement with the drum surface, where the endless belt is driven by belt deflecting means (28,29) including at least one drive roller (28), said deflecting means being arranged so as to define a nip for pulling in the card between said endless belt (26) and said drum (25), and
   - means (31) for feeding the card into said nip, so that said card is transported by said endless belt drive means co-acting with the drum rotation,

and in that said magnetic readout and erase means include a track readout head (32) and a track erase head (33), the angular distance between said readout head and said erase head being selected so as to be at least equal to the card's dimension in the direction of transport motor means (30) and control means (I,$B_1$,22a) being provided to transport said card from said nip and to stop said card within the gap between said readout head and said erase head for the time interval required for the erase process to be effected after the readout process

2. A device according to Claim 1, characterized in that it comprises a second driven belt (27) cooperating with the drive belt (26) and receiving its motion from the drum (25), and in that the two belts (26,27) flanking each other act on the drum edges and correspondingly engage the card (S) edges to maintain them correctly aligned during the transfer step.

3. A device according to claim 2, characterized in that in the driven end drive belts (26,27) encircle the drum (25) over an arc equal in length to half its circumference, and in that the card inlet and outlet mouths (22,23) are located on the extensions of tangent lines to the drum (25) led from the ends of the diameter bounding said arc.

4. A device according to claim 3, characterized in that the card feeding means for feeding a card in the nip between the driven belt and drive belt (26,27) and drum surface include a pinch roller cooperating with a pair of belt deflector rollers.

5. A device according to Claim 4, characterized in that it comprises, at the card introduction mouth (22), a magnetic switch (22a) which enables the motor (30) via a flip-flop ($B_1$) and an interface (I) upon presence of said card (S).

6. A device according to claim 5, characterized in that each head (32,33) is connected to a respective (readout or erase) drive circuit through an automatic switch-over selector which sequentially enables said heads.

7. A device according to claim 5, characterized in that it comprises electronic circuit means DC$_1$, DC$_2$, ST, LS with an interface (I) for connection to a set to be enabled, which interface checks the mutually exchanged signals between said device and set, comprising: card presence signal (a) - gear motor forward command (b) - readout data transfer (c) - obliteration command (d).

## Revendications

1. Dispositif de lecture et d'oblitération de carte magnétique à prépaiement comportant des moyens mécaniques d'entraînement de carte (25-30) et des moyens magnétiques séparés de lecture et d'effacement de piste (32,33), en particulier pour une utilisation avec des cartes magnétiques (S) permettant l'usage d'appareils de téléphone public, caractérisé en ce que lesdits moyens d'entraînement de carte comportent

   - un tambour (25) pouvant tourner librement afin de transférer ladite carte (S) depuis une lumière d'admission (22) jusqu'à une lumière de sortie (23), lesdites lumières d'admission et de sortie étant séparées l'une de l'autre,
   - un entraînement à courroie sans fin (26) en contact avec la surface du tambour, dans lequel la courroie sans fin est entraînée par des moyens déflecteurs de courroie (28,29) comprenant au moins un galet d'entraînement (28), lesdits moyens déflecteurs étant disposés de manière à définir un pincement pour tirer la carte entre ladite courroie sans fin (26) et ledit tambour (25), et
   - des moyens (31) pour introduire la carte dans ledit pincement, de sorte que ladite carte est transportée par lesdits moyens d'entraînement à courroie sans fin coopérant avec la rotation du tambour,

   et en ce que lesdits moyens magnétiques de lecture et d'effacement comprennent une tête de lecture de piste (32) et une tête d'effacement de piste (33), la distance angulaire entre ladite tête de lecture et ladite tête d'effacement étant choisie de manière à être au moins égale à la dimension de la carte dans le sens du transport, un moteur (30) et des moyens de commande (I,B$_1$,22a) étant prévus pour transporter ladite carte depuis ledit pincement et pour arrêter ladite carte à l'intérieur de l'intervalle entre ladite tête de lecture et ladite tête d'effacement pendant l'intervalle de temps nécessaire pour effectuer le processus d'effacement après le processus de lecture.

2. Dispositif selon la revendication 1, caractérisé en ce qu'il comporte une seconde courroie entraînée (27) coopérant avec la courroie d'entraînement (26) et recevant son mouvement du tambour (25), et en ce que les deux courroies (26,27) disposées côte à côte agissent sur les bords du tambour et sont en contact de façon correspondante avec les bords de la carte (S) pour les maintenir correctement alignés durant l'étape de transfert.

3. Dispositif selon la revendication 2, caractérisé en ce que les courroies entraînée et d'entraînement (26,27) entourent le tambour (25) sur un arc de longueur égale à la moitié de sa circonférence, et en ce que les lumières d'admission et de sortie (22,23) de la carte sont situées sur les prolongements des tangentes au tambour (25) tracées depuis les extrémités du diamètre limitant ledit arc.

4. Dispositif selon la revendication 3, caractérisé en ce que les moyens d'avancement de la carte, afin de faire progresser une carte dans le pincement entre la courroie entraînée et la courroie d'entraînement (26,27) et la surface du tambour, comprennent un galet pinceur coopérant avec une paire de galets déflecteurs de courroie.

5. Dispositif selon la revendication 4, caractérisé en ce qu'il comporte, à la lumière d'admission (22) de la carte, un commutateur magnétique (22a) qui déclenche le moteur (30), par l'intermédiaire d'une bascule (B$_1$) et d'un interface (I),en présence de ladite carte (S).

6. Dispositif selon la revendication 5, caractérisé en ce que chaque tête (32,33) est reliée à un circuit d'excitation respectif (lecture ou effacement) par l'intermédiaire d'un sélecteur de commutation automatique qui commande séquentiellement lesdites têtes.

7. Dispositif selon la revendication 5, caractérisé en ce qu'il comporte des circuits électroniques (DC$_1$,DC$_2$, ST, LS) avec un interface (I) pour une connexion à un appareil devant être déclenché, lequel interface contrôle les signaux mutuellement échangés entre ledit dispositif et l'appareil,comportant : un signal de présence de carte (a) - une commande d'avancement du moteur-réducteur (b) - un transfert de données de lecture (c) - une commande d'oblitération (d).

## Patentansprüche

1. Lese- und Entwertegerät für im voraus bezahlte Magnetkarten, enthaltend mechanische Kartenmitnahmemittel (25 - 30) und getrennte Magnetspuren-Lese- und -Löschmittel (32, 33), insbesondere zur Verwendung mit Magnetkarten (S) für öffentliche Telefone, dadurch gekennzeichnet, daß die Kartenmitnahmemittel enthalten:
   - eine frei drehbare Trommel (25) zur Übertragung der Karte (S) von einer Einlaßöffnung (22) zu einer Auslaßöffnung (23), wobei Einlaßöffnung und Auslaßöffnung voneinander getrennt sind,
   - einen endlosen Riemenantrieb (26) in Berührungseingriff mit der Trommeloberfläche, wobei der endlose Riemen von Riemenablenkmitteln (28, 29) mit mindestens einer Antriebswalze (28) angetrieben wird und die Ablenkmittel derart angeordnet sind, daß sie einen Spalt zum Einziehen der Karte zwischen den endlosen Riemen (26) und die Trommel (25) bilden, und
   - Mittel (31) zum Zuführen der Karte in den Schlitz, derart daß die Karte von dem mit der Trommeldrehung zusammenwirkenden endlosen Riemenantrieb transportiert wird,

   und daß die Magnet-Lese- und Löschmittel einen Spurenauslesekopf (32) und einen Spurenlöschkopf (33) enthalten, wobei der winkelmäßige Abstand zwischen dem Lesekopf und dem Löschkopf derart ausgewählt ist, daß er mindestens der Abmessung der Karte in der Transportrichtung gleich ist, und daß Motormittel (30) und Steuermittel (I, B1, 22a) vorgesehen sind, um die Karte von dem Schlitz zu transportieren und sie in der Lücke zwischen dem Lesekopf und dem Löschkopf für das Zeitintervall anzuhalten, das für den nach dem Leseprozeß durchzuführenden Löschprozeß erforderlich ist.

2. Gerät nach Anspruch 1, dadurch gekennzeichnet, daß es einen zweiten mit dem Antriebsriemen (26) zusammenwirkenden und seine Bewegung von der Trommel (25) erhaltenden angetriebenen Riemen (27) aufweist, und daß die beiden einander flankierenden Riemen (26, 27) auf die Trommelkanten einwirken und dementsprechend an den Kanten der Karte (S) angreifen, um sie während der Bewegung korrekt ausgerichtet zu halten.

3. Gerät nach Anspruch 2, dadurch gekennzeichnet, daß der angetriebene und der Antriebsriemen (26, 27) die Trommel (25) über einen Bogen einschließen, der in seiner Länge ihrem halben Umfang gleich ist, und daß die Karteneinlaß- und Auslaßöffnungen (22, 23) in Verlängerung der Tangenten an die Trommel (25) angeordnet sind, die von den Enden des den Bogen begrenzenden Durchmessers ausgehen.

4. Gerät nach Anspruch 3, dadurch gekennzeichnet, daß die Kartenzuführmittel zum Einführen einer Karte in den Spalt zwischen dem angetriebenen Riemen und dem Antriebsriemen (26, 27) und der Trommeloberfläche eine Klemmwalze aufweisen, die mit ein Paar von Riemenablenkrollen zusammenwirken.

5. Gerät nach Anspruch 4, dadurch gekennzeichnet, daß es an der Karteneinführöffnung (22) einen Magnetschalter (22a) aufweist, der den Motor (30) mit Hilfe eines Flip-Flops (B1) und einer Schnittstelle (I) bei Vorhandensein der Karte (S) einschaltet.

6. Gerät nach Anspruch 5, dadurch gekennzeichnet, daß jeder Kopf (32, 33) durch einen automatischen Umschaltselektor, der die Köpfe sequentiell einschaltet, mit einer jeweiligen (Lese- bzw. Lösch-) Antriebsschaltung verbunden ist.

7. Gerät nach Anspruch 5, dadurch gekennzeichnet, daß es elektronische Schaltungsmittel (DC1, DC2, ST, LS) mit einer Schnittstelle (I) zur Verbindung mit einem einzuschaltenden Satz aufweist, wobei die Schnittstelle die wechselseitig ausgetauschten Signale zwischen dem Gerät und dem Satz überprüft, enthaltend: Kartenanwesenheitssignal (a) - Antriebsmotorvorwärtskommando (b) - Auslesedatenübertragung (c) -Löschkommando (d).

Fig. 1

Fig. 2

Fig. 3

Fig. 4

_Fig. 5_

_Fig. 6_

# Fig. 7